# EUROPÄISCHE PATENTANMELDUNG

(11) **EP 0 673 963 A1**
(43) Veröffentlichungstag der Anmeldung: **27.09.1995**
(21) Anmeldenummer: 95103965.0
(22) Anmeldetag: 17.03.1995
(51) Int. Cl.: C08J 9/18, B29C 44/34

(54) **Verfahren zur kontinuierlichen Herstellung von expandierten Polymer-Partikeln**

(30) Priorität: 18.03.1994 DE 4409400
(71) Anmelder: BASF AKTIENGESELLSCHAFT, D-67056 Ludwigshafen (DE)
(72) Erfinder: Laible, Karl, D-67141 Neuhofen (DE); Kögl, Wolfram, D-68309 Mannheim (DE); Beck, Gilbert, D-67125 Dannstadt-Schauernheim (DE)
(74) Vertreter: Geissler, Bernhard, Dr. jur., Dipl.-Phys.

(57) **Zusammenfassung**

Bei einem kontinuierlichen Verfahren zur Herstellung geschäumter Polymer-Partikel wird die Erwärmung der Polymer-Partikel und die Imprägnierung mit dem Treibmittel in einer gasfreien turbulenten Kolbenströmung durchgeführt. Vorzugsweise wird ein ggf. abschnittsweise aufgebautes langgestrecktes Rohr zur Imprägnierung eingesetzt, das mit Heizmantel versehen sein kann.

## Beschreibung

Die Erfindung betrifft ein Verfahren zur Herstellung von expandierten Polymer-Partikeln.

Die Herstellung von expandierten Polymer-Partikeln erfolgt üblicherweise nach einem diskontinuierlichen Verfahren wie es beispielsweise in der EP-A-0 053 333 beschrieben ist.

Hierbei werden Polymer-Partikel und ein flüchtiges Treibmittel in einen geschlossenen Behälter in Wasser in Gegenwart eines Antiblock-/Netzmittels dispergiert, die Dispersion auf eine Temperatur in der Nähe der Schmelztemperatur der Polymer-Partikel erhitzt und dadurch die Polymer-Partikel mit dem Treibmittel imprägniert, wobei der Druck innerhalb des Behälters ansteigt. Dann wird ein Ende des Behälters geöffnet und die treibmittelhaltigen Polymer-Partikel und Wasser gleichzeitig in eine Atmosphäre entlassen, die unter einem niedrigeren Druck als das Innere des Behälters gehalten wird. Unter Aufschäumen entstehen hierbei expandierte Polymer-Partikel.

Die hiernach enthaltenen expandierten Polymer-Partikel variieren jedoch stark in ihrem Expansionsverhältnis. Es wurde daher vorgeschlagen, die im Druckbehälter vorherrschenden Bedingungen möglichst konstant zu halten.

So wurde in der EP-A-0 095 109 vorgeschlagen, den im Druckbehälter herrschenden Druck sowie die Temperatur konstant zu halten. Es sollte insbesondere auch der Partialdruck des flüchtigen Treibmittels konstant gehalten werden. Die während des Schäumvorgangs im Druckbehälter verlorenen Mengen an flüchtigem Treibmittel und anorganischem Gas sollten ersetzt werden.

In der EP-B-0 290 943 wurde vorgeschlagen, den Verlust an wässrigem Dispersionsmedium durch Zuführung einer sogenannten Heizflüssigkeit (vorzugsweise Wasser) in den Druckbehälter auszugleichen. Die Aufrechterhaltung von konstanten Bedingungen im Druckbehälter erfordert jedoch einen erheblichen apparativen Aufwand.

Außerdem ist bei dem diskontinuierlichen Verfahren der Zeitbedarf wegen des jeweils notwendigen Einfüllens der Einsatzstoffe und insbesondere dem jeweils erforderlichen Aufheizen der Mischung erheblich.

In der JP-A-60/168 610 wurde ein quasi-kontinuierliches Vorschäumen von synthetischen Polymer-Partikeln vorgeschlagen, bei dem durch Extrusion und anschließende Granulierung erhaltene Polymer-Partikel in ein Dispersionsmedium wie Wasser gegeben werden. Dann wird die Dispersion in einen Heiztank und daran anschließend in einen von mehreren Schäumtanks gegeben. Im Schäumtank werden die Polymer-Partikel in Gegenwart des Treibmittels erhitzt und mit dem Treibmittel imprägniert. Anschließend wird in eine Atmosphäre mit einem niedrigeren Druck expandiert. Durch Umschalten zwischen drei Heiztanks wurde ein quasikontinuierlicher Betrieb vorgeschlagen. Der apparative Aufwand dabei ist erheblich. Die Nachteile des diskontinuierlichen Verfahrens bleiben bestehen.

In der DE-A-42 11 972 wird ein kontinuierliches Verfahren zur Herstellung von Schaumperlen beschrieben. In diesem Verfahren werden die zu expandierenden Polymer-Partikel zusammen mit dem Treibmittel kontinuierlich einer schlanken, druckbetriebenen, nicht gerührten Stoffaustauschsäule zugeführt. In dieser werden sie unter Druck einer Wärmebehandlung ausgesetzt, und die Polymer-Partikel werden anschließend entspannt und expandiert. Um eine gleichmäßige Konsistenz und eine gleichgroße Wärmebehandlung aller Polymer-Partikel zu erreichen, wird vorgeschlagen, in der Stoffaustauschsäule Einbauten wie beispielsweise Umlenkbleche oder statische Mischer (Spalte 3, Zeilen 44 - 67) und zur Erzeugung einer besonders engen Verweilzeitverteilung die Verwirbelung des Säuleninhalts durch Gasblasen (Spalte 3, Zeile 68 bis Spalte 4, Zeile 3) einzusetzen. Dieses Verfahren ist auf die Erzielung hoher Turbulenzen angelegt. Es hat den Nachteil, daß die erhitzten Polymer-Partikel sich an den Einbauten in der Säule festsetzen können, was zu unterschiedlichen Imprägnierbedingungen durch unterschiedliche Verweilzeiten führt, und daß das zugeführte Gas weiteren apparativen und steuerungstechnischen Aufwand mit sich bringt und zu Störungen im Verfahren führen kann.

Aufgabe der vorliegenden Erfindung war es daher, ein Verfahren zur kontinuierlichen Herstellung von expandierten Polymer-Partikeln bereitzustellen, welches die Nachteile der bekannten Verfahren nicht aufweist. Insbesondere soll ein Verfahren zur kontinuierlichen Herstellung von expandierten Polymer-Partikeln angegeben werden, bei dem die Partikel-eigenschaften, insbesondere der Verschäumungsgrad, möglichst gleichförmig sind und bei dem der apparative Aufwand und damit die Kosten der Produktionsanlage minimiert werden. Vorzugsweise soll der Aufbau von Polymer-Partikeln in der Vorrichtung während des Verfahrens verhindert werden, d. h. es muß für gleichlange Verweilzeiten gesorgt werden. Diese Aufgabe wird durch Verfahren gelöst, wie sie in den Ansprüchen definiert sind. Das Verfahren umfaßt dabei vorzugsweise folgende Stufen:
a) Dosieren der Einsatzstoffe ohne Treibmittel in ein Mischsystem, Mischen und Aufheizen der Einsatzstoffe,
b) Austragen der Mischung in den Imprägnierteil
c) Zudosieren des Treibmittels
d) weiteres Aufheizen der Dispersion bis in die Nähe der Schmelztemperatur des Polymers,
e) Entspannen der Dispersion unter Aufschäumen der treibmittelhaltigen Polymer-Partikel,
f) Abtrennen der Flüssigkeit,
g) Waschen der expandierten Polymer-Partikel,
h) Austragen der gewaschenen expandierten Polymer-Partikel, und
i) Trocknen der expandierten Polymer-Partikel.
j) Rückverdichten der Treibmittel
Die Stufen a) - f) und vorzugsweise auch die Stufen g), h) und i) werden dabei kontinuierlich ausgeführt, c), d), e) und f) finden vorzugsweise voneinander räumlich getrennt statt.

Als besonders bevorzugte Merkmale, durch die sich diese Erfindung vom Stande der Technik abhebt, sind zu nennen:
1. Wegen der bevorzugten Kolbenströmung im Imprägnierrohr hat jedes Partikel die gleiche Imprägnierzeit.
2. Vor allem wegen der Kolbenströmung, aber auch durch Konstanthalten der Temperatur und des Drucks im Entspannungsbehälter, erfährt jedes Partikel gleiche Imprägnier- und Schäumbedingungen. Dies führt gegenüber dem Stande der Technik, aber vor allem gegenüber dem diskontinuierlichen Verfahren, zu wesentlich gleichmäßiger geschäumten Partikeln.
3. Mit der bevorzugten kontinuierlichen Fahrweise hat man die Möglichkeit, im Entspannbehälter einen konstanten Druck - sowohl Überals auch Unterdruck - einzustellen. Damit erhält man eine zusätzliche Möglichkeit, die Produkteigenschaften zu beeinflussen. Insbesondere kann man durch Einstellung eines Unterdrucks den Verbrauch von Treibmittel reduzieren.

Die bei dem erfindungsgemäßen Verfahren bevorzugten Materialien werden im folgenden beschrieben:

### Polymer-Partikel

Die Polymer-Partikel können insbesondere von folgenden Polymeren stammen und ggf. übliche Zusätze, nämlich Füllstoffe, farbgebende Mittel und dgl., enthalten:

Vinylpolymere und Copolymere wie beispielsweise Styrolpolymere, Vinylchloridpolymere, Polyolefine. Die Polyolefine sind gegenwärtig bevorzugt. Insbesondere können Polyethylene wie beispielsweise LLDPE, Polypropylen, Ethylen-Propylen-Copolymere, Propylen-Butylen-Copolymere (Random- oder Block-Copolymere) sowie Ethylen-Propylen-Butylen-Terpolymere verwendet werden.

Weitere Polymere, die erfindungsgemäß einsetzbar sind, sind Polyamide, Polyester, Styrol-Butadien-Copolymere, sowie Polyimide, Polycarbonate, Polyacrylate und Polysulfone.

Gemische aus zwei oder mehr der obigen Polymere können ebenfalls eingesetzt werden.

Die bevorzugten Polymer-Partikel haben vor dem Schäumen eine Form, bei der die größte Längenausdehnung vorzugsweise 0,5 bis 10 mm beträgt.

### Suspensionsmedium

Als Suspensionsmedium wird im allgemeinen Wasser verwendet. Andere brauchbare Suspensionsmedien sind Flüssigkeiten mit einem Siedepunkt über 70°C bei Normaldruck.

### Antiblockmittel

Vorzugsweise werden erfindungsgemäß Antiblockmittel eingesetzt, um die Verbindung der Polymer-Partikel (Verklumpung) untereinander zu vermindern, vorzugsweise zu verhindern. Als solche Suspensionsstabilisatoren können alle in Wasser unlöslichen Substanzen in pulvriger Form eingesetzt werden, z. B. Talkum, Phosphate, Carbonate.

### Netzmittel

Bevorzugt werden erfindungsgemäß Netzmittel der Suspension zugesetzt. Insbesondere kommen hierfür oberflächenaktive Substanzen wie Seifen in Frage.

### Treibmittel

Erfindungsgemäß werden Treibmittel eingesetzt, die einen Siedepunkt haben, der beträchtlich tiefer liegt als der Schmelzpunkt der Polymer-Partikel. Außerdem handelt es sich bei den Treibmitteln vorzugsweise um solche, die leicht in die erweichten Polymer-Partikel eindiffundieren und die Polymer-Partikel bei plötzlicher Druckreduzierung expandieren.

Für die verschiedenen Polymere sind dabei die folgenden Treibmittel bevorzugt: Kohlenwasserstoffe von C₃ bis C₈, voll- oder teilhalogenierte Kohlenwasserstoffe, CO₂, Stickstoff, Luft oder Gemische aus diesen Treibmitteln.

Die bevorzugten Betriebsbedingungen für das erfindungsgemäße Verfahren sind die folgenden:

### Temperatur in der Erwärmungs- und Imprägnierstation

- Temperatur im Mischsystem: 1°C bis 150°C, vorzugsweise 50°C bis 100°C
- Temperatur kurz vor der Entspannung: von 30°C unter dem Schmelzpunkt bis 15°C über dem Schmelzpunkt des nicht imprägnierten Polymeren. Bei Polymeren, die ein Maximum in der DSC-Kurve aufweisen, wird der Schmelzpunkt nach ISO 3146 bestimmt.

### Druck

Der Druck im Imprägnierteil wird vorzugsweise mit hydraulischen Mitteln, insbesondere Pumpen, besonders solchen Pumpenanordnungen erzeugt, die einen gleichförmigen Strom der unter Druck stehenden Suspension erzeugen. Der durch das Pumpsystem aufgebaute Druck vor der Entspannung ist größer als die Summe der Dampfdrücke der einzelnen Komponenten.
- Der Druck im Mischsystem beträgt:: Umgebungsdruck bis 5 bar Überdruck, vorzugsweise Umgebungsdruck
- Der Druck vor der Entspannung beträgt:: 5 bis 100 bar Überdruck, vorzugsweise 10 bis 80 bar Überdruck
- Der Druck nach der Entspannung beträgt:: 0,1 bar (absolut) bis 2,5 bar (absolut), vorzugsweise 0,5 bar (absolut) bis 1,5 bar (absolut)

### Verweilzeit

Die Verweilzeit der Suspension im Mischsystem richtet sich nach der Kapazität der dort installierten Heizung und nach der dort gewünschten Temperatur.

Die Verweilzeit im beheizten Rohr hängt von der eingesetzten Paarung Kunststoff/Treibmittel ab. Sie liegt zwischen 20 sec und 20 min, vorzugsweise bei 1 - 10 Minuten.

### Strömungsgeschwindigkeit

Die Strömungsgeschwindigkeit der Suspension durch die Imprägnier- und Erwärmungsstation soll größer als 2300 · v/d sein, wobei v die Viskosität des Suspensionsmediums und d der Rohrdurchmesser bedeuten. Bevorzugt wird eine Strömungsgeschwindigkeit von 1 bis 2 m/sec.

Im Imprägnierrohr liegt vorzugsweise eine Pfropfenströmung vor, um Rückvermischungen zu verhindern. Rückvermischung führt zu unterschiedlich imprägnierten (gasbeladenen) Teilchen und damit zu unterschiedlichen Aufschäumquotienten.

### Mengenverhältnisse

Das Gewichtsverhältnis von Polymer-Partikeln zu Suspensionsmedium ist vorzugsweise 0,05 - 0,7, und insbesondere 0,1 - 0,5.

Antiblockmittel, falls eingesetzt, werden vorzugsweise in einer Menge zugegeben, so daß das Gewichtsverhältnis von Antiblockmittel zu Polymer-Partikeln im Bereich von 0,005 - 0,1, und insbesondere 0,01 - 0,05 liegt.

Falls oberflächenaktive Mittel eingesetzt werden, kommen diese in einer Menge zum Einsatz, die sich aus dem Gewichtsverhältnis von oberflächenaktivem Mittel zu Polymer-Partikeln ergibt, das bevorzugt im Bereich von 10⁻⁵ - 10⁻³, und insbesondere 5·10⁻⁵ - 10⁻⁴ liegt.

Das Treibmittel wird der unter Druck befindlichen Suspension in einer Menge zugeführt, die sich aus der Menge der Polymer-Partikel und dem gewünschten Expansionsgrad ergibt, vorzugsweise liegt das Gewichtsverhältnis zwischen dem Gewicht des zugefügten Treibmittels und dem Gewicht der Polymer-Partikel im Bereich von 0,04 - 0,4, insbesondere 0,08 - 0,25.

Die Erfindung betrifft auch eine Vorrichtung zur Durchführung des Verfahrens wie sie in den Ansprüchen gekennzeichnet ist. Diese Vorrichtung weist folgende durch Rohrverbindungen miteinander verbundene Einheiten auf:
a) ein Mischsystem zum Mischen von Polymer-Partikeln, Suspensionsmittel und ggf. Dispersionsmittel und oberflächenaktive Mittel sowie sonstige Zusätze. Diese Mischsystem kann weiterhin mit Einrichtungen zum Vorerwärmen der Suspension, insbesondere eine Einrichtung zum Zuführen von heißem Suspensionsmittel, insbesondere heißem Wasser, Dampf und/oder einem Heizmantel versehen sein.
   Das Mischsystem ist bevorzugt mit einer Pumpe verbunden, die die Suspension auf den Arbeitsdruck bringt und dem Imprägniersystem zuführt.
b) ein Imprägniersystem, das ein langgestrecktes, ggf. abschnittsweise angeordnetes Rohr umfaßt. Dieses Imprägniersystem ist dabei so ausgebildet und angeordnet, daß es keine Einbauten oder Füllkörper aufweist und die Gefahr des Haftenbleibens von Polymer-Partikeln weitgehend vermieden wird.
   Das Rohr ist vorzugsweise beheizt. Eine Temperaturregelung sorgt dafür, daß am Ende des Rohres die Entspannungstemperatur erreicht wird.
   Vorzugsweise beträgt die Gesamtlänge des Rohrs (Summe der Längen aller Rohrabschnitte) 5 - 500 m. Der Innendurchmesser des Rohres beträgt vorzugsweise 5 - 100 mm.
   Eine Anordnung des Rohres in Abschnitten von 5 bis 20 m Länge ist bevorzugt. Die Rohrabschnitte können waagrecht oder senkrecht angeordnet sein.
c) ein Expansionssystem, das mit dem Ende des Rohres verbunden ist. Dieses Entspannungssystem besteht aus einer verstellbaren oder fest eingestellten Vorrichtung, wie z. B. einem Ventil, einer Blende, einer Düse oder ähnlichem.
   Bevorzugte Durchmesser der Austrittsöffnungen sind im Bereich von 0,3 - 15 cm.

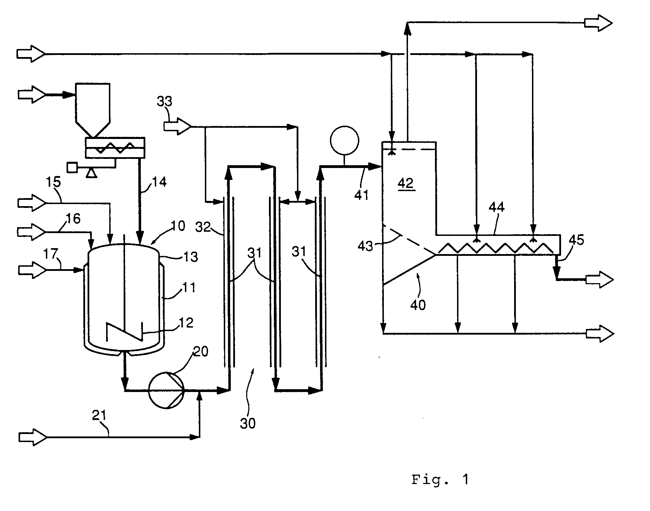

Die Erfindung wird im folgenden anhand der Zeichnung näher erläutert. Dabei zeigt
- Fig. 1: eine schematische Ansicht einer Vorrichtung zur Durchführung des Verfahrens
Einem Mischsystem 10, das einen mit Heizmantel 11 und Rührer 12 versehenen Kessel 13 aufweist, werden über eine Leitung 14 Polyolefinpellets, insbesondere Polypropylenpellets kontinuierlich zugeführt. Über eine Leitung 15 wird Antiblockmittel und ggf. Netzmittel und über eine Leitung 16 Wasser dem Kessel 13 kontinuierlich zugeführt. Der Heizdampf wird über eine Leitung 17 dem Heizmantel zugeführt. Auf diese Weise kann die Ausgangssuspension auf eine Temperatur von beispielsweise 50 - 100°C vorerhitzt werden.

Mit Hilfe einer Pumpe 20 wird die Suspension aus Polyolefinpellets, Wasser und den sonstigen Zusätzen unter Druck von z. B. 20 bar einem Imprägnier- und Heizsystem 30 zugeführt. Zusammen mit der Suspension wird über die Leitung 21 ein Treibmittel, insbesondere Butan, zugeführt.

Das Imprägnier- und Heizsystem 30 weist ein langgestrecktes Rohr auf, das aus abwechselnd vertikal nach oben und vertikal nach unten gerichteten Rohrabschnitten 31 besteht. Die Rohrabschnitte 31 sind mit Heizmänteln 32 versehen, denen Heizdampf aus einer Dampfquelle 33 zugeführt wird.

Typischerweise weist das Imprägnier- und Heizsystem 30 etwa 10 - 40 Rohrabschnitte 31 auf. In dem in Fig. 1 dargestellten System fließt die Suspension während des Imprägniervorganges abwechselnd von unten nach oben und von oben nach unten.

Die Suspension mit den mit Treibmittel versehenen Polyolefinpellets wird aus dem Imprägnier- und Heizsystem 30 in ein Kunststoffschaumteilchen-Gewinnungssystem 40 überführt. Dabei wird die unter Druck stehende Suspension zunächst durch eine Öffnung oder ein Ventil 41 in einen Behälter 42 entspannt. Die Kunststoffschaumteilchen werden im Behälter 42 vorgewaschen und mit Hilfe eines Siebes 43 vom Suspensionsmedium und von der Waschflüssigkeit getrennt. In einer Austragsvorrichtung 44 werden die Polymer-Partikel dann noch weitergewaschen und das gewaschene Produkt wird dann einer Endbehandlung, insbesondere einer Trocknung, über die Leitung 45 zugeführt. Vorzugsweise liegt der Druck im Behälter 42 zwischen 0,1 bar absolut und 1,5 bar absolut. Der Behälter 42 kann mittels einer Vakuumpumpe, die das bei der Entspannung freiwerdende Gas absaugt, auf Drücken unter Atmosphärendruck gehalten werden. Die Schaumpartikel werden dann über eine barometrische Austragsvorrichtung ausgetragen. Der Behälter kann aber auch mit einer Druckregelung auf einen Druck über Atmosphärendruck eingestellt werden.

Es ist bevorzugt, innerhalb des Imprägnier- und Heizsystems eine möglichst turbulente Kolbenströmung aufrechtzuerhalten, damit die Polymer-Partikel alle einer gleichförmigen und derselben Imprägnierwirkung, insbesondere einer gleichen Imprägnierzeit, ausgesetzt werden.

## Patentansprüche

1. Verfahren zum kontinuierlichen Herstellen von geschäumten Polymer-Partikeln, bei dem
a) in einer Mischzone Polymer-Partikel, Suspensionsmittel, vorzugsweise Wasser, ggf. Antiblockmittel und ggf. oberflächenaktive Mittel zu einer Suspension vermischt werden,
b) die gebildete Suspension unter Druckaufbau in ein Imprägnier-System gepumpt wird,
c) ein Treibmittel in die unter Druck stehende Suspension eingebracht wird,
d) die Temperatur der Treibmittel enthaltenden Suspension erhöht oder konstant gehalten wird und das Treibmittel in die Polymer-Partikel eindiffundiert,
e) die erhitzte Suspension mit dem Treibmittel enthaltenden Polymer-Partikel in eine Zone niedrigeren Drucks unter Ausbildung expandierter Polymer-Partikel eingeführt wird,
f) die expandierten Polymer-Partikel aus dem sich ergebenden Gemisch gewonnen werden,
**dadurch gekennzeichnet**, daß
das Eindiffundieren des Treibmittels in die Polymer-Partikel im wesentlichen ohne Gasphase und ohne zusätzlich zugeführtes Gas erfolgt und daß vorzugsweise die Stufe a) und/oder die Stufe c) kontinuierlich durchgeführt werden.

2. Verfahren nach Anspruch 1, **dadurch gekennzeichnet**, daß die Erhöhung der Temperatur der Suspension und das Eindiffundieren des Treibmittels in die Polymer-Partikel in einem ggf. aus Abschnitten aufgebauten einbautenfreien Rohr erfolgt.

3. Verfahren nach Anspruch 2, **dadurch gekennzeichnet,** daß das Rohr, ggf. abschnittsweise, mit einem Heizmantel, insbesondere einem Heizmantel zum Zuführen von Heizfluiden versehen ist.

4. Verfahren nach Anspruch 2 oder 3, **dadurch gekennzeichnet,** daß das Verhältnis des Innendurchmessers des Rohrs zu der größten Ausdehnung der Polymer-Partikel im Bereich von etwa 5 - 50, vorzugsweise 5 - 25 liegt.

5. Verfahren nach einem der Ansprüche 2 - 4, **dadurch gekennzeichnet,** daß die Suspension mit einer Strömungsgeschwindigkeit des fluiden Mediums durch das Rohr gefördert wird, so daß turbulente Kolbenströmung vorliegt.

6. Verfahren nach einem der Ansprüche 2 - 5, **dadurch gekennzeichnet,** daß die Verweildauer jedes Polymer-Partikels im Rohr im wesentlichen gleich lang ist.

7. Verfahren nach einem der Ansprüche 2 - 6, **dadurch gekennzeichnet**, daß die Suspension durch ein Rohr gepumpt wird, bei dem das Verhältnis der Gesamtlänge des Rohrs zu dessen Durchmesser im Bereich von 50 - 100 000 liegt.

8. Verfahren nach einem der Ansprüche 2 - 7, **dadurch gekennzeichnet,** daß die lineare Strömungsgeschwindigkeit der Suspension in dem Rohr größer als 2300 · v/d ist. (v = Viskosität, d = Rohrinnendurchmesser)

9. Verfahren nach einem der Ansprüche 2 - 8, **dadurch gekennzeichnet,** daß die Suspension vom Ende des Rohrs, durch eine oder mehrere Drosselöffnungen, in eine Zone verminderten Drucks unter Expansion der Polymer-Partikel ausgetragen wird.

10. Verfahren nach einem der Ansprüche 1 - 9, **gekennzeichnet durch** eines oder mehrere der folgenden Verfahrensmerkmale:
a) als Polymer-Partikel werden Polyolefine, insbesondere Polypropylenpolymere, vorzugsweise Ethylen-Propylen-Copolymere, Propylen-Butylen-Copolymere (Random- oder Block-Copolymere), Ethylen-Propylen-Butylen-Terpolymere verwendet. Weitere Polymere, die erfindungsgemäß einsetzbar sind, sind Vinylpolymere und Copolymere wie beispielsweise Styrolpolymere und Vinylchloridpolymere, Polyamide, Polyester, Styrol-Butadien Copolymere sowie Polyimide, Polycarbonate, Polyacrylate und Polysulfone;
b) als Treibmittel werden organische Flüssigkeiten und Gase, vorzugsweise Kohlenwasserstoffe von C₃ bis C₈, voll- oder teilhalogenierte Kohlenwasserstoffe und sowie anorganische Gase, wie CO₂, Stickstoff, Luft oder Gemische aus denselben, eingesetzt;
c) das Gemisch wird von einer Pumpe teilweise in die Mischzone zurückgeführt;
d) die Imprägnierbedingungen liegen für Polyolefine in folgenden Bereichen:
Temperatur
- Temperatur im Mischsystem: 1°C bis 150°C, vorzugsweise 50°C bis 100°C
- Temperatur kurz vor der Entspannung: von 30°C unter dem Schmelzpunkt bis 15°C über dem Schmelzpunkt des nicht imprägnierten Polymeren. Bei Polymeren, die ein Maximum in der DSC-Kurve aufweisen, wird der Schmelzpunkt nach ISO 3146 bestimmt.
Druck
Der Druck im Mischsystem beträgt: Umgebungsdruck bis 5 bar Überdruck, vorzugsweise Umgebungsdruck;
der Druck vor der Entspannung beträgt: 5 bis 100 bar Überdruck, vorzugsweise 10 bis 80 bar Überdruck;
der Druck nach der Entspannung beträgt: 0,1 bar (absolut) bis 2,5 bar (absolut), vorzugsweise 0,5 bar (absolut) bis 1,5 bar (absolut).
Verweilzeit
20 Sek. - 20 Min., vorzugsweise 1 - 10 Min.
e) die Oberfläche der Imprägnierzone, mit der die Suspension in Berührung kommt, ist zumindest in dem Bereich, in dem die Polymer-Partikel erweicht sind, mit einer für die Polymer-Partikel abhäsiven polierten Innenseite versehen.

11. Vorrichtung zur Durchführung des Verfahrens nach einem der Verfahrensansprüche, **gekennzeichnet durch**
a) ein Mischsystem (10) zum Mischen von Polymer-Partikeln, Suspensionsmittel und ggf. Dispersionsmittel und oberflächenaktivem Mittel;
b) eine Pumpe (20), um die Suspension aus dem Mischsystem auf Arbeitsdruck zu bringen;
c) ein Imprägniersystem (30), das ein langgestrecktes, ggf. abschnittsweise angeordnetes Rohr aufweist, das frei von Einbauten oder Füllkörpern ist, und das mit der Pumpe (20) zur Aufnahme der unter Druck befindlichen Suspension verbunden ist;
d) ein mit dem Rohr verbundenes Expansionssystem (41), das zumindest eine Expansionsöffnung aufweist;
e) einen Behälter 42, aus dem kontinuierlich die entstehenden Gase, das Suspensionsmedium und ggf. Waschwasser abgezogen werden;
f) eine Vorrichtung, die kontinuierlich Schaumpartikel, Suspensionsmedium und die übrigen Zusätze aus dem Entspannungsbehälter 42 austrägt.

12. Vorrichtung nach Anspruch 11, **gekennzeichnet durch** eines oder mehrere der folgenden Merkmale:
a) das Mischsystem (10) ist mit einer Vorheizeinrichtung, insbesondere einer Einrichtung zur Zufuhr von heißem Suspensionsmittel, Dampf und/oder einem Heizmantel (11) versehen;
b) das Rohr ist, ggf. abschnittsweise, mit einer Heizeirrichtung, insbesondere einem Mantel für Durchströmung von Heizfluiden versehen;
c) das Rohr hat eine polierte Innenseite oder eine Innenseite aus polymerophobem Material, insbesondere aus PTFE;
d) das Rohr weist 1 bis 50 Abschnitte auf.
